# EUROPÄISCHE PATENTANMELDUNG

(11) **EP 4 309 877 A1**
(43) Veröffentlichungstag der Anmeldung: **24.01.2024**
(21) Anmeldenummer: 23184986.0
(22) Anmeldetag: 12.07.2023
(51) Int. Cl.: B29C 64/112, B29C 64/371, B29C 64/209, B29C 64/30

(54) **VERFAHREN ZUM VERHINDERN VON ABLAGERUNGEN AN EINER DÜSENPLATTE**

(30) Priorität: 21.07.2022 EP 22186211
(71) Anmelder: Ivoclar Vivadent AG, 9494 Schaan (LI)
(72) Erfinder: Reinhardt, Jonas, 7206 Igis (CH); Bitar, Nicola, 9462 Montlingen (CH)
(74) Vertreter: Baldus, Oliver

(57) **Zusammenfassung**

Die vorliegende Erfindung betrifft ein Verfahren zum Verhindern von Ablagerungen einer Druckflüssigkeit an einer Düsenplatte (101) eines Druckkopfes innerhalb eines 3D-Druckers (100), mit dem Schritt eines Erhöhens eines Sättigungsgrades einer Trägerflüssigkeit (103) der Druckflüssigkeit in der Luft vor der Düsenplatte (101).

## Beschreibung

Die vorliegende Erfindung betrifft Verfahren zum Verhindern von Ablagerungen einer Druckflüssigkeit an einer Düsenplatte eines Druckkopfes innerhalb eines 3D-Druckers und einen 3D-Drucker mit Druckkopf, der eine Düsenplatte umfasst.

Beim Drucken von wässrigen Schlickern, die Wasser und Keramikpartikel umfassen, verdampft das Wasser an den Düsen, so dass der Feststoff die Düsen verstopft. Um ein Verstopfen der Düsen zu verhindern, kann eine Reinigung in einem Ultraschallbad oder eine manuelle Reinigung erfolgen. Gegenwärtige Drucker umfassen eine Reinigungsvorrichtung, die mit dem Druckkopf angefahren werden kann. In diese wird der Druckkopf normalerweise über ein feuchtes Tuch gefahren. Die Reinigung ist aber mit verschiedenen Verfahren zu erzielen.

Bei dem Jetten von wässrigen Keramikschlickern oder anderen wasserbasierten oder hydrophilen Materialien mittels Inkjet-Druckköpfen, kommt es an der Unterseite einer Düsenplatte zur Austrocknung des Schlickers. Dies führt zu einer Verstopfung der Düsen, wenn der Feuchtigkeitsgrad der umgebenden Atmosphäre niedriger ist als 90%. Obwohl der Schlicker an der Oberseite der Düsenplatte vorliegt, reicht dies in der Regel nicht aus, die angetrockneten Partikel in den Düsen wieder in fließfähigen Schlicker umzuwandeln und die Düsen wieder durchgängig zu machen.

Es ist die technische Aufgabe der vorliegenden Erfindung, die Bildung von Ablagerungen an der Unterseite der Düsenplatte des Druckkopfes und das Austrocknen von Druckmaterial in den Düsen der Düsenplatte zu verhindern.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Verfahren zum Verhindern von Ablagerungen einer Druckflüssigkeit an einer Düsenplatte eines Druckkopfes innerhalb eines 3D-Druckers gelöst, mit dem Schritt eines Erhöhens eines Sättigungsgrades einer Trägerflüssigkeit der Druckflüssigkeit in der Luftfeuchtigkeit vor der Düsenplatte. Die Trägerflüssigkeit kann Wasser oder ein anderes geeignetes Lösungsmittel sein. Im Falle von Wasser ist der Sättigungsgrad die relative Luftfeuchte. Die relative Luftfeuchte lässt unmittelbar erkennen, in welchem Grad die Luft mit Wasserdampf gesättigt ist. Bei dem Erhöhen des Sättigungsgrades der Trägerflüssigkeit in der Luft vor der Düsenplatte kann sich die Trägerflüssigkeit an der Düsenplatte niederschlagen. Umgekehrt erhöht eine Trägerflüssigkeit auf der Düsenplatte ebenfalls den Sättigungsgrad der Trägerflüssigkeit in der Luft vor der Düsenplatte. Ein Film der Trägerflüssigkeit auf der Düsenplatte reduziert die Ablagerungen zusätzlich. Mit dem Verfahren braucht keine separate Reinigungsstation angefahren zu werden. Zudem kann die Trägerflüssigkeit kontaktlos auf die Düsenplatte aufgebracht werden, d.h. ohne direkten mechanischen Kontakt mit einer weiteren Vorrichtung, wie beispielsweise einem Schwamm. Bei dem Verfahren trocknet beispielsweise wasserbasierter Schlicker an der Unterseite der Düsenplatte oder in den Düsen nicht aus, so dass Düsen durch angetrockneten Schlicker nicht verstopfen können.

In einer technisch vorteilhaften Ausführungsform des Verfahrens wird die Düsenplatte mit der Trägerflüssigkeit benetzt. Dadurch wird beispielsweise der technische Vorteil erreicht, dass ein Flüssigkeitsfilm die Bildung von Ablagerungen an der Düsenplatte zusätzlich verhindert.

In einer weiteren technisch vorteilhaften Ausführungsform des Verfahrens wird die Trägerflüssigkeit auf die Düsenplatte aufgedampft. Dadurch wird beispielsweise der technische Vorteil erreicht, dass die Trägerflüssigkeit gleichmäßig auf die Düsenplatte aufgebracht werden kann und ein Flüssigkeitsfilm die Ablagerungen zusätzlich verhindert.

In einer weiteren technisch vorteilhaften Ausführungsform des Verfahrens wird die Trägerflüssigkeit auf die Düsenplatte gesprüht. Dadurch wird beispielsweise der technische Vorteil erreicht, dass die Trägerflüssigkeit mit geringem Aufwand auf die Düsenplatte gebracht werden kann.

In einer weiteren technisch vorteilhaften Ausführungsform des Verfahrens wird die Trägerflüssigkeit vor der Düsenplatte vernebelt. Dadurch wird beispielsweise der technische Vorteil erreicht, dass der Sättigungsgrad der Trägerflüssigkeit vor der Düsenplatte wirksam erhöht werden kann.

In einer weiteren technisch vorteilhaften Ausführungsform des Verfahrens wird lokal vor der Düsenplattenunterseite eine Atmosphäre mit einem hohen Sättigungsgrad erzeugt. Der Sättigungsgrad beträgt beispielsweise mehr als 50%, vorzugsweise mehr als 90%, hochvorzugsweise mehr als 95% und höchstvorzugsweise mehr als 99%. Das lokale Erzeugen wird beispielsweise durch einen gezielten Luftstrom entlang der Düsenplatte erreicht. Dadurch wird der technische Vorteil erreicht, dass die Atmosphäre direkt vor der Unterseite der Düsenplatte feucht gehalten wird. Ein wasserbasierter Schlicker kann in diesem Fall kein Wasser an die Umgebung abgeben, so dass dieser nicht austrocknet und in den Düsen fließfähig bleibt. Das Verfahren kann während dem Prozess ("On the Fly") durchgeführt werden. Der Druckkopf braucht dann nicht zu einer separaten Reinigungsstation gefahren zu werden.

In einer weiteren technisch vorteilhaften Ausführungsform des Verfahrens wird die Trägerflüssigkeit mittels Ultraschalles zerstäubt. Durch das Zerstäuben entstehen kleine Tröpfchen der Trägerflüssigkeit. Dadurch wird beispielsweise der technische Vorteil erreicht, dass ein Nebel der Trägerflüssigkeit mit geringem Aufwand erzeugt werden kann.

In einer weiteren technisch vorteilhaften Ausführungsform des Verfahrens wird die Trägerflüssigkeit auf der Düsenplatte durch die Düsen eingesaugt. Dadurch wird beispielsweise der technische Vorteil erreicht, dass die Düsen der Düsenplatte funktionsfähig, d.h. durchgängig, bleiben.

In einer weiteren technisch vorteilhaften Ausführungsform des Verfahrens wird die Trägerflüssigkeit vor, während oder nach einem Druckbetrieb auf die Düsenplatte aufgebracht. Dadurch wird beispielsweise der technische Vorteil erreicht, dass die Düsenplatte jederzeit betriebsbereit ist.

In einer weiteren technisch vorteilhaften Ausführungsform des Verfahrens wird die Trägerflüssigkeit oder mit Trägerflüssigkeit angereicherte Luft über eine Auslassdüse ausgebracht oder die Trägerflüssigkeit durch ein Tuch oder einen Schwamm auf der Düsenplatte aufgebracht. Das Tuch oder der Schwamm können hierbei leicht zusammengedrückt werden. Der Schwamm oder das Tuch können seitlich an der Düsenplatte angebracht sein. In diesem Fall bewegen sich diese zusammen mit der Düsenplatte. Dadurch wird beispielsweise der technische Vorteil erreicht, dass der Sättigungsgrad direkt vor der Düsenplatte erhöht werden kann.

In einer weiteren technisch vorteilhaften Ausführungsform des Verfahrens wird die Trägerflüssigkeit oder mit Trägerflüssigkeit angereicherte Luft über eine Absaugdüse an der Düsenplatte abgesaugt. Dadurch wird beispielsweise der technische Vorteil erreicht, dass verbrauchte Trägerflüssigkeit oder Luft mit verringertem Sättigungsgrad von der Düsenplatte entfernt werden kann.

In einer weiteren technisch vorteilhaften Ausführungsform des Verfahrens weist die Trägerflüssigkeit zum Erhöhen des Sättigungsgrades eine Temperatur über 50°C auf. Dadurch wird beispielsweise der technische Vorteil erreicht, dass Ablagerungen auf der Düsenplatte effizient entfernt werden können.

In einer weiteren technisch vorteilhaften Ausführungsform des Verfahrens wird die auf der Düsenplatte abgeschiedene Trägerflüssigkeit durch die Düsen abgesaugt. Dadurch wird beispielsweise der technische Vorteil erreicht, dass die Düsenplatte automatisch gereinigt wird.

Gemäß einem zweiten Aspekt wird die technische Aufgabe durch einen 3D-Drucker mit einer Düsenplatte, mit einem System zum Erhöhen eines Sättigungsgrades einer Trägerflüssigkeit der Druckflüssigkeit in der Luft vor der Düsenplatte. Durch den 3D-Drucker werden die gleichen technischen Vorteile wie durch das Verfahren nach dem ersten Aspekt erreicht.

In einer technisch vorteilhaften Ausführungsform des 3D-Druckers umfasst der 3D-Drucker eine Verdampfungseinrichtung zum Erzeugen von Dampf der Trägerflüssigkeit vor der Düsenplatte, eine Ultraschalleinrichtung zum Erzeugen von vernebelter Trägerflüssigkeit vor der Düsenplatte und/oder eine Sprüheinrichtung zum Besprühen der Düsenplatte mit der Trägerflüssigkeit. Dadurch wird beispielsweise der technische Vorteil erreicht, dass der Sättigungsgrad vor der Düsenplatte wirksam erhöht werden kann.

In einer weiteren technisch vorteilhaften Ausführungsform des 3D-Druckers ist an der Düsenplatte eine Auslassdüse zum Erhöhen des Sättigungsgrades angeordnet. Dadurch wird beispielsweise der technische Vorteil erreicht, dass die Luftfeuchtigkeit direkt vor der Düsenplatte erhöht werden kann.

In einer weiteren technisch vorteilhaften Ausführungsform des 3D-Druckers ist an der Düsenplatte eine Absaugdüse zum Absaugen von Trägerflüssigkeit oder mit Trägerflüssigkeit angereicherter Luft angeordnet. Dadurch wird beispielsweise der technische Vorteil erreicht, dass verbrauchtes Trägerflüssigkeit oder Luft mit verringertem Sättigungsgrad von der Düsenplatte entfernt werden kann.

In einer weiteren technisch vorteilhaften Ausführungsform des 3D-Druckers ist die Auslassdüse auf der einen Seite der Düsenplatte angeordnet und die Absaugdüse auf der anderen Seite der Düsenplatte angeordnet. Dadurch wird beispielsweise der technische Vorteil erreicht, dass durch einen Luftstrom vor der Düsenplatte ein hoher Sättigungsgrad aufrechterhalten werden kann.

In einer weiteren technisch vorteilhaften Ausführungsform des 3D-Druckers umfasst der 3D-Drucker eine Heizung zum Erwärmen der Trägerflüssigkeit, die zum Erhöhen des Sättigungsgrads verwendet wird. Dadurch wird beispielsweise der technische Vorteil erreicht, dass Ablagerungen auf der Düsenplatte effizient entfernt werden können.

In einer weiteren technisch vorteilhaften Ausführungsform wird durch Anlegen eines Unterdrucks im Fluidsystem des Druckers an den Düsen der wieder aufgelöste Feststoff von der Unterseite der Düsenplatte über die Düsen wieder eingesaugt. Dadurch wird beispielsweise der technische Vorteil erreicht, dass die Düsen wieder funktionsfähig, d.h. durchgängig, gemacht werden.

Ausführungsbeispiele der Erfindung sind in den Zeichnungen dargestellt und werden im Folgenden näher beschrieben.

Es zeigen:
- Fig. 1: eine schematische Ansicht eines 3D-Druckers;
- Fig. 2A und 2B: eine schematische Ansicht einer Düsenplatte mit und ohne Ablagerungen;
- Fig. 3A und 3B: eine schematische Ansicht einer Düsenplatte mit Wasserfilm und einer gelösten Ablagerung;
- Fig. 4: eine schematische Ansicht eines Befeuchtungssystems für den Druckkopf;
- Fig. 5: eine weitere schematische Ansicht eines Befeuchtungssystems für den Druckkopf;
- Fig. 6: eine schematische Ansicht einer Aufnahme für einen Druckkopf; und
- Fig. 7: eine schematische Ansicht eines Druckkopfes und eines Wasserdampfgenerators.

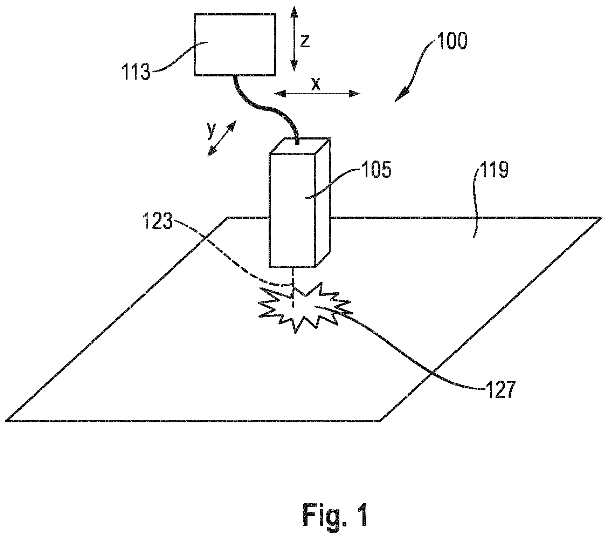

Fig. 1 zeigt eine schematische Ansicht eines 3D-Druckers 100. Der 3D-Drucker 100 führt einen Freistrahl-Materialauftrag in einem additiven Fertigungsprozess durch. Hierbei wird Rohmaterial in Form von kleinen Tropfen einer Druckflüssigkeit selektiv abgelegt. Beim Poly-Jet oder Multi-Jet Modelling wird ein Modell durch einen Druckkopf 105 mit mehreren linear angeordneten Düsen gefertigt.

Der 3D-Drucker 100 verwendet beispielsweise die Druckflüssigkeit, um eine dentale Restauration 127 auf einer Bauplattform 119 schichtweise aufzubauen. Die Druckflüssigkeit umfasst beispielsweise Feststoffpartikel und eine Trägerflüssigkeit für die Feststoffpartikel.

Zum Drucken wird das Material aus der Druckflüssigkeit mittels eines Druckstrahls 123 aus einer Vielzahl von Düsen punktuell aufgetragen. Der Druckkopf 105 ist in X-Richtung, Y-Richtung und in Z-Richtung verfahrbar, so dass der Druckstrahl 123 jede Stelle der Bauplattform 119 erreichen kann. Die Druckflüssigkeit wird mittels einer Zuführeinrichtung 113 zu dem Druckkopf 105 zugeführt.

Hierbei entsteht jedoch das Problem, dass im Druckkopf 105 Ablagerungen in Form von Tintenresten, Fremdstoffen oder Sedimenten entstehen können. Diese haften an den Innseiten des Fluidsystems im Inneren des Druckkopfes 105 und außen an der Düsenplatte 101 an, so dass diese mit der Zeit Verstopfungen verursachen und die Funktion der Düsen 107 (Printing Nozzle) und des Druckkopfes 105 beinträchtigen.

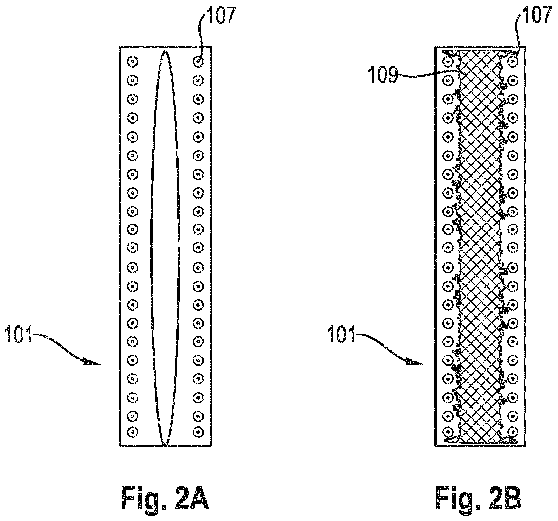

Fig. 2A zeigt eine schematische Außenansicht einer Düsenplatte 101 ohne Ablagerungen. Die Düsenplatte 101 umfasst eine Vielzahl von Düsen 107, die in zwei parallelen Reihen angeordnet sind. Aus den Düsen 107 wird die Druckflüssigkeit ausgegeben.

Fig. 2B zeigt eine Düsenplatte 101 mit Ablagerungen 109. Die Ablagerungen 109 entstehen beim Drucken durch eingetrocknete Druckflüssigkeit. Beispielsweise bilden sich angetrocknete Schlickerrückstände an der Unterseite der Düsenplatte 101 um die Düsen 107 herum. Wenn diese Ablagerungen 109 nicht entfernt werden, nimmt die Druckqualität ab und es entstehen Verstopfungen an den Düsen 107.

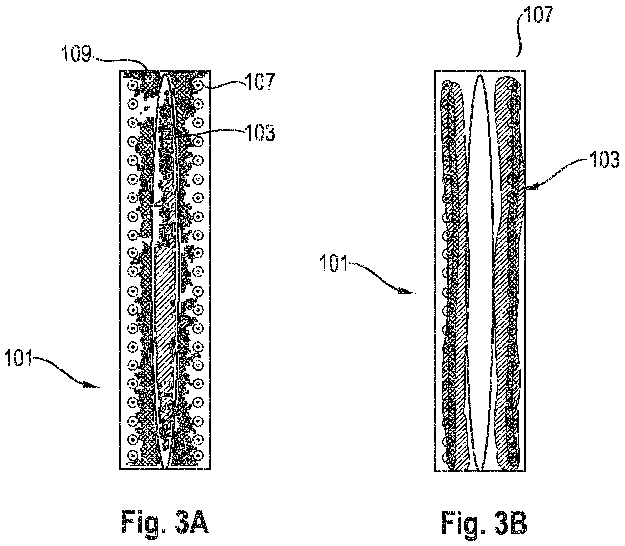

Fig. 3A zeigt eine schematische Ansicht der Düsenplatte 101 mit aufgebrachtem Film von Wasser als Trägerflüssigkeit 103. Die Trägerflüssigkeit kann im Allgemeinen jedes geeignete Lösungsmittel sein. Das Wasser 103 wird in der Mitte der Düsenplatte 101 aufgebracht und wirkt dort auf die Ablagerungen 109 ein. Das Wasser 103 löst die Verschmutzung auf. Während einem Betrieb des 3D-Druckers wird Wasserdampf zur Düsenplatte 101 gebracht oder es werden feine Wassertropfen auf die Düsenplatte 101 gesprüht. Dadurch wird die Düsenplatte 101 benetzt. Statt Wasser kann auch die Trägerflüssigkeit der jeweiligen Druckflüssigkeit verwendet werden.

Fig. 3B zeigt eine schematische Ansicht der Düsenplatte 101 mit einer gelösten Ablagerung 109. Der Druckkopf 105 wird beim Drucken mit einem leichten Unterdruck betrieben, damit die Druckflüssigkeit nicht heraustropft. Anhand des Unterdrucks kann eingestellt werden, ob eine kleine Menge des Wassers eingesogen wird oder ob eine Benetzung ausreichend ist. Die gelöste Ablagerung 109 kann durch die Düsen 107 eingesaugt werden.

Dadurch kann sichergesellt werden, dass immer alle Düsen 107 der Düsenplatte 101 funktionsfähig sind, ohne dass hierzu eine separate Reinigungsstation angefahren werden muss. Letzteres spart Kosten, Bauraum und erhöht die Druckgeschwindigkeit. Um die Reinigungswirkung zu verstärken, kann der Unterdruck zeitweise erhöht werden. Da das Offenhalten der Düsen 107 und die Reinigung der Düsenplatte 101 während einem Druckbetrieb (On the Fly) geschieht, entsteht keine Unterbrechung durch Anfahren einer separaten Reinigungsstation. Zudem kann sichergestellt werden, dass keine Druckdüse ausfällt. Der Jetting-Prozess kann so gesteuert werden, dass es lokal nicht zu einem Antrocknen des Schlickers an der Unterseite der Düsenplatte 101 kommt.

Die beim Reinigen aufgesaugte Lösung kann dann in einem Tank aufgefangen werden und unter Vakuum verdampft werden, so dass diese wieder entfernt wird. Dadurch verändert sich die Feststoffkonzentration nicht, wenn fortlaufend eine kleine Menge an nicht partikelhaltiger Flüssigkeit ins System gelangt.

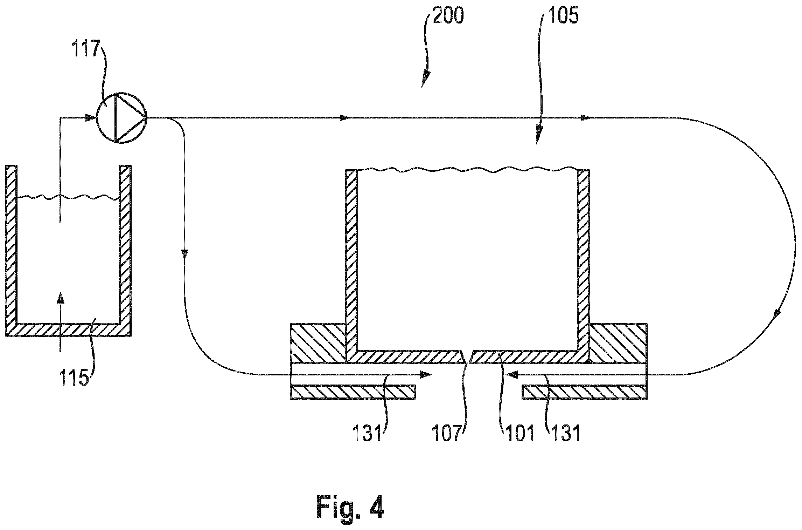

Fig. 4 zeigt eine schematische Ansicht eines Befeuchtungssystems 200 für den Druckkopf 105. Das Befeuchtungssystem 200 umfasst einen Wassertank 115, in dem Wasser 103 zum Befeuchten der Düsenplatte 101 gespeichert ist. Das Wasser 103 wird über eine Pumpe 117 über Leitungen zu dem Druckkopf 101 befördert.

Auf beiden Seiten der Düsenplatte 101 befindet sich jeweils eine Auslassdüse 131. Die Auslassdüsen 131 geben das Wasser 103 aus dem Wassertank 115 auf die Düsenplatte 101 aus. Dadurch wird nicht nur die Düsenplatte 101 befeuchtet, sondern auch die Luftfeuchtigkeit im räumlichen Bereich vor der Düsenplatte 101 erhöht. Der wieder aufgelöste Feststoff wird hierbei durch die Düsen 107 mittels eines Unterdrucks in das Fluidsystem zurückgeführt.

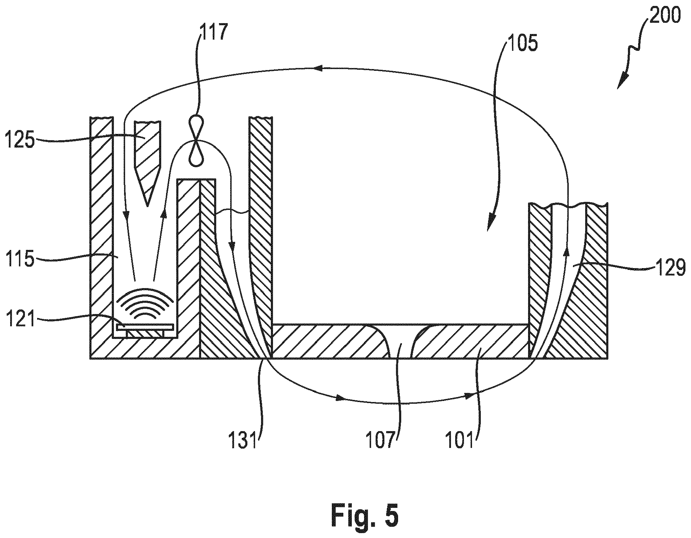

Fig. 5 zeigt eine weitere schematische Ansicht einer Einrichtung oder eines Systems 200 zum Erhöhen eines Sättigungsgrades für den Druckkopf 105. Das System 200 umfasst ebenfalls einen Wassertank 115, in dem Wasser 103 zum Befeuchten der Düsenplatte 101 gespeichert ist.

In dem Wassertank 115 ist ein Ultraschall-Piezoelement 121 als Zerstäuber (Vaporizer) angeordnet. Das Ultraschall-Piezoelement 121 erzeugt Ultraschallschwingungen innerhalb des Wassertanks 115 nahe der Wasseroberfläche. Das Ultraschall-Piezoelement 121 wandelt elektrische Schwingungen in mechanische Schwingungen um. Die mechanischen Schwingungen führen an der Oberfläche des Flüssigkeitsfilmes zur Ausbildung von Kapillarwellen, die sich mit steigender Anregungsfrequenz exponentiell aufrichten. Erreicht die Anregungsfrequenz einen bestimmten Wert, bilden sich Tropfen eines bestimmten Durchmessers aus. Die Erzeugung des Nebels erfolgt mittels mechanischer Schwingungen von bis zu 3 MHz, die auf die Flüssigkeit übertragen werden. Der Tropfendurchmesser sinkt mit steigender Anregungsfrequenz oder höherer Dichte und kleinerer Oberflächenspannung der jeweiligen Flüssigkeit. Durch das Ultraschall-Piezoelement 121 können Tropfengrößen von 2 bis 4 um erreicht werden. Durch das Ultraschall-Piezoelement 121 wird erreicht, dass das Wasser aus dem Wassertank 115 zerstäubt oder verdampft wird.

Dadurch wird oberhalb der Wasseroberfläche ein Nebel 125 aus feinen Flüssigkeitstropfen gebildet. Der so erzeugte Nebel 125 wird mittels eines Umluftsystems mittels eines Gebläses oder einer Pumpe 117 über eine Auslassdüse (Outlet) 131 und eine Absaugdüse (Inlet) 129 über die Düsenplatte 101 geführt. Nach einem Absaugen durch die Absaugdüse 129 wird der Nebel 125 in den Wassertank 115 zurückgeführt.

Die Auslassdüse 131 und die Absaugdüse 129 können in der gleichen Ebene wie die Düsen 107 angeordnet sein oder direkt in der Düsenplatte 101 integriert sein. Durch die Auslassdüse 131 und die Absaugdüse 129 wird erreicht, dass eine laminar anliegende Strömung unterhalb entlang der Düsenplatte 101 aus einem Nebel 125 mit einem hohen Grad an Luftfeuchtigkeit erzeugt wird. Dies verhindert, dass ein Feuchtigkeitsgefälle zwischen Schlicker und der Atmosphäre in unmittelbarer Nähe der Düsen 107 entsteht.

Die laminar anliegende Strömung unterhalb entlang der Düsenplatte 101 sollte eine um ein Vielfaches kleinere Strömungsgeschwindigkeit als die Austrittsgeschwindigkeit des Materialtropfens aufweisen, damit die Flugrichtung des Materialtropfens nicht zu stark abgelenkt wird.
Außerdem sollte die laminar anliegende Strömung annähernd orthogonal zu der Flugrichtung des Materialtropfens verlaufen, idealer Weise im rechten Winkel zu der in Reihe angeordneten Düsen 107. Die Strömung kann während dem Drucken einzelner Materialtropfen unterbrochen werden, so dass diese das Druckergebnis nicht beeinflusst.

Durch den laminaren Luftstrom mit hoher Luftfeuchtigkeit, der an der Unterseite der Düsenplatte 101 anliegt, wird erreicht, dass die Wasseraufnahme durch die Umgebungsluft an den Düsen 107 verhindert wird und so der Schlicker nicht austrocknet. Dadurch werden Ablagerungen 109 an den Düsen 107 und der Düsenplatte 101 verhindert.

Das Verfahren verringert einen technischen Aufwand und spart Bauraum, da keine separate Reinigungsstation für die Düsenplatte 101 erforderlich ist. Da die Reinigung während dem Druckbetrieb durchgeführt werden kann, können Druckaufträge schneller durchgeführt werden.

Alternativ kann die Atmosphäre des gesamten Bauraums des 3D-Druckers so feucht gehalten werden, dass der Schlicker an der Unterseite der Düsenplatte 101 keine Möglichkeit hat, Feuchtigkeit an die Umgebung abzugeben und so auszutrocknen.

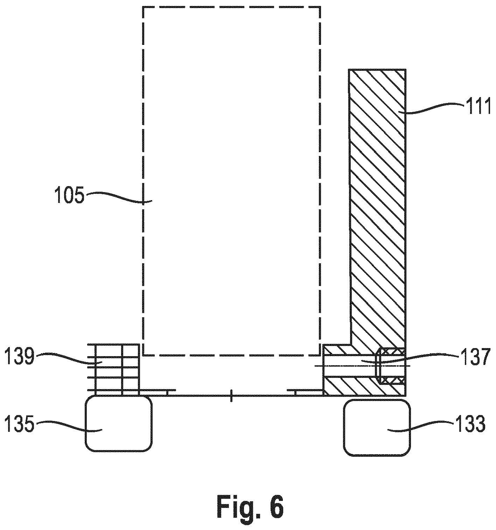

Fig. 6 zeigt eine schematische Ansicht einer Aufnahme 111 für den Druckkopf 105. Die Aufnahme 111 ist durch ein Formteil gebildet, in das der Druckkopf 105 von oben eingesetzt wird. Die Aufnahme 111 kann einen Zuführkanal 137 und einen Abführkanal 139 umfassen, die an die Auslassdüse 131 und die Absaugdüse 129 ankoppeln. Über Zuführkanal 137 und Abführkanal 139 werden der Wasserdampf oder Wasser zugeführt oder abgeführt.

Alles was benötigt wird, um eine zuverlässige Funktionsweise des Druckkopfes 105 zu gewährleisten, kann in die Aufnahme 111 des Druckkopfes 105 integriert werden. Diese Elemente fahren dadurch mit dem Druckkopf 105 mit, wie beispielsweise ein Vakuumanschluss, eine Druckluftanschluss, ein Ultraschallerzeuger, ein Verdampfer oder ein Aerosolerzeuger. Es muss keine separate Reinigungsstation angefahren werden oder keine separate Reinigungsstation unter den Druckkopf gefahren werden, falls dieser vor Ort bleibt und die Bauplattform sich bewegt.

Zusätzlich kann die Aufnahme 111 eine Verdampfungseinrichtung 133 zum Erzeugen von Wasserdampf vor der Düsenplatte 101 umfassen. In der Verdampfungseinrichtung 133 wird Wasser 103 in der Umgebung der Düsenplatte 101 mittels einer Heizeinrichtung erhitzt, so dass Wasserdampf entsteht. Das verdampfte Wasser 103 kondensiert an der Düsenplatte 101. Dadurch wird nicht nur die Luftfeuchtigkeit in der Umgebung der Düsenplatte 101 erhöht, sondern die Düsenplatte 101 auch mit einem Flüssigkeitsfilm benetzt, der Ablagerungen 109 verhindert.

Die Aufnahme 111 kann auch eine Sprüheinrichtung 135 zum Besprühen der Düsenplatte 101 mit Wasser 103 umfassen, beispielsweise mittels einer Düse. Auch durch die Sprüheinrichtung 135 kann die Düsenplatte 101 mit Wasser 103 benetzt werden, so dass sich Ablagerungen 109 durch einen Flüssigkeitsfilm verhindern lassen.

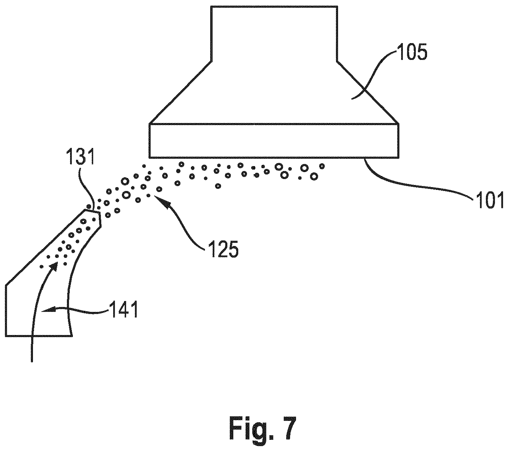

Fig. 7 zeigt eine schematische Ansicht eines Druckkopfes 105 und eines Wasserdampfgenerators 141. Der Wasserdampfgenerator 141 kann beispielsweise als Ultraschall-Piezoelement ausgebildet sein, das in einem Wassertank angeordnet ist. Der 3D-Drucker kann einen Verdampfer, eine Heizung oder beides als System zum Erhöhen eines Sättigungsgrads einer Trägerflüssigkeit einer Druckflüssigkeit in der Luft vor der Düsenplatte umfassen.

Der erzeugte Nebel 125 wird mittels eines Gebläses oder einer Pumpe 117 über eine Austrittsdüse (Auslass) 131 zur Düsenplatte 101 geleitet. Der Nebel 125 kann an der Düsenplatte 101 kondensieren und von dort als Wassertropfen nach unten tropfen. Bei einer nicht-horizontalen Bauplattform 119 können diese Wassertropfen in einer Auffangwanne gesammelt werden, die wiederum den Wassertank speisen kann, so dass eine Wiederaufnahme oder Wiederansaugung der Trägerflüssigkeit in die Düsen verhindert wird.

Der Nebel 125 zum Erhöhen des Sättigungsgrades kann eine Temperatur von 50°C oder mehr aufweisen. Der Nebel 125 mit einer Temperatur von zumindest 50°C kann getrocknete oder abgelagerte Druckflüssigkeit auf der Düsenplatte 101 wirksam aufweichen. Damit wird beispielsweise der technische Vorteil erreicht, dass Ablagerungen auf der Düsenplatte 101 effizient, einfach und schnell entfernt werden können. Der Einsatz von Wassernebel 125 mit einer Temperatur von zumindest 50°C bis 60°C macht den Einsatz aggressiver Chemikalien überflüssig. Dies hat den weiteren technischen Vorteil, dass die Düsenplatte 101 effektiv gereinigt werden kann, ohne dass aggressive Chemikalien erforderlich sind, die zu Korrosion führen könnten.

In diesem Fall wird kondensierte Trägerflüssigkeit auf der Oberfläche der Düsenplatte 101 gebildet. Falls die Düsenplatte 101 eine Temperatur zwischen 20°C und 25°C aufweist und der Dampf der Trägerflüssigkeit zum Erhöhen der Sättigung zwischen 50°C und 60°C liegt ist eine Reinigung der Düsenplatte 101 sehr effektiv. Der Luftdruck kann 1,013 hPa betragen. Ein möglicher maximaler Sättigungsgrad der Trägerflüssigkeit kann anhand eines Mollier-Diagramms ermittelt werden, das eine grafische Darstellung des Zusammenhangs zwischen Lufttemperatur, Feuchtigkeitsgehalt und Luftenthalpie bei einem vordefinierten Druck ist.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Vorrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: 3D-Drucker
- 101: Düsenplatte
- 103: Trägerflüssigkeit/Wasser
- 105: Druckkopf
- 107: Düse
- 109: Ablagerungen
- 111: Aufnahme
- 113: Zuführeinrichtung
- 115: Wassertank
- 117: Pumpe
- 119: Bauplattform
- 121: Ultraschall-Piezoelement
- 123: Druckstrahl
- 125: Nebel
- 127: dentale Restauration
- 125: Nebel
- 129: Absaugdüse
- 131: Auslassdüse
- 133: Verdampfungseinrichtung
- 135: Sprüheinrichtung
- 137: Zuführkanal
- 139: Abführkanal
- 141: Wasserdampfgenerator

- 200: System

## Patentansprüche

1. Verfahren zum Verhindern von Ablagerungen einer Druckflüssigkeit an einer Düsenplatte (101) eines Druckkopfes innerhalb eines 3D-Druckers (100), mit dem Schritt:
- Erhöhen eines Sättigungsgrades einer Trägerflüssigkeit (103) der Druckflüssigkeit in der Luft vor der Düsenplatte (101).

2. Verfahren nach Anspruch 1, wobei die Düsenplatte (101) mit der Trägerflüssigkeit (103) benetzt wird.

3. Verfahren nach einem der vorangehenden Ansprüche, wobei die Trägerflüssigkeit (103) auf die Düsenplatte (101) aufgedampft wird.

4. Verfahren nach einem der vorangehenden Ansprüche, wobei die Trägerflüssigkeit (103) auf die Düsenplatte (101) gesprüht wird.

5. Verfahren nach einem der vorangehenden Ansprüche, wobei die Trägerflüssigkeit (103) vor der Düsenplatte (101) vernebelt wird.

6. Verfahren nach Anspruch 5, wobei die Trägerflüssigkeit (103) mittels Ultraschalls verstäubt wird.

7. Verfahren nach einem der vorangehenden Ansprüche, wobei die Trägerflüssigkeit (103) auf der Düsenplatte (101) durch die Düsen (107) eingesaugt wird.

8. Verfahren nach einem der vorangehenden Ansprüche, wobei die Trägerflüssigkeit (103) vor, während oder nach einem Druckbetrieb auf die Düsenplatte (101) aufgebracht wird.

9. Verfahren nach einem der vorangehenden Ansprüche, wobei die Trägerflüssigkeit (103) oder mit Trägerflüssigkeit angereicherte Luft über eine Auslassdüse (131) ausgebracht wird oder die Trägerflüssigkeit (103) durch ein Tuch oder einen Schwamm auf der Druckplatte (101) aufgebracht wird.

10. Verfahren nach einem der vorangehenden Ansprüche, wobei die Trägerflüssigkeit (103) oder mit Trägerflüssigkeit angereicherte Luft über eine Absaugdüse (129) an der Düsenplatte (101) abgesaugt wird.

11. Verfahren nach einem der vorangehenden Ansprüche, wobei die Trägerflüssigkeit (103) zum Erhöhen des Sättigungsgrades eine Temperatur über 50°C aufweist.

12. 3D-Drucker (100) mit einer Düsenplatte (101), mit:
- einem System (200) zum Erhöhen eines Sättigungsgrades einer Trägerflüssigkeit (103) der Druckflüssigkeit in der Luft vor der Düsenplatte (101).

13. 3D-Drucker nach Anspruch 12, wobei der 3D-Drucker eine Verdampfungseinrichtung (133) zum Erzeugen von Dampf der Trägerflüssigkeit vor der Düsenplatte (101), eine Ultraschalleinrichtung (121) zum Erzeugen von vernebelter Trägerflüssigkeit (103) vor der Düsenplatte (101) und/oder eine Sprüheinrichtung (135) zum Besprühen der Düsenplatte (101) mit der Trägerflüssigkeit (103) umfasst.

14. 3D-Drucker nach Anspruch 12 oder 13, wobei an der Düsenplatte (101) eine Auslassdüse (131) zum Erhöhen des Sättigungsgrades angeordnet ist.

15. 3D-Drucker nach einem der Ansprüche 12 bis 14, wobei an der Düsenplatte (101) eine Absaugdüse (129) zum Absaugen von Trägerflüssigkeit (103) oder mit Trägerflüssigkeit angereicherter Luft angeordnet ist.

16. 3D-Drucker nach einem der Ansprüche 14 oder 15, wobei die Auslassdüse (131) auf der einen Seite der Düsenplatte (101) angeordnet ist und die Absaugdüse (129) auf der anderen Seite der Düsenplatte (101) angeordnet ist.

17. 3D-Drucker nach einem der Ansprüche 12 bis 16, wobei der 3D-Drucker über eine Heizung zum Erwärmen der Trägerflüssigkeit (103) umfasst, die zum Erhöhen des Sättigungsgrads verwendet wird.
